# EUROPEAN PATENT SPECIFICATION

(11) **EP 4 638 054 B1**
(45) Date of publication and mention of the grant of the patent: **29.07.2026**
(21) Application number: 23837777.4
(22) Date of filing: 15.12.2023
(51) Int. Cl.: B23K 37/047, B23K 37/053, B23Q 7/00, B23Q 1/76, B23K 26/08, B23K 26/38, B23K 101/06

(54) **MACHINE FOR LASER PROCESSING OF TUBES AND PROFILES, IN PARTICULAR MACHINE FOR LASER CUTTING OF TUBES AND PROFILES, WITH SYSTEM FOR SUPPORTING THE TUBE OR PROFILE ARRANGED DOWNSTREAM OF A LASER WORKING MEANS, AND INCLUDING AT LEAST ONE VARIABLE RADIUS SHAPE**
MASCHINE ZUR LASERBEARBEITUNG VON ROHREN UND PROFILEN, INSBESONDERE MASCHINE ZUM LASERSCHNEIDEN VON ROHREN UND PROFILEN, MIT SYSTEM ZUR UNTERSTÜTZUNG DES ROHRS ODER PROFILS STROMABWÄRTS EINER LASERBEARBEITUNGSEINRICHTUNG UND MIT MINDESTENS EINER VARIABLEN RADIUSFORM
MACHINE POUR LE TRAITEMENT LASER DE TUBES ET DE PROFILÉS, EN PARTICULIER MACHINE POUR LA DÉCOUPE LASER DE TUBES ET DE PROFILÉS, AVEC SYSTÈME DE SUPPORT DU TUBE OU DU PROFILÉ DISPOSÉ EN AVAL D'UN MOYEN DE TRAVAIL LASER, ET COMPRENANT AU MOINS UNE FORME À RAYON VARIABLE

(30) Priority: 21.12.2022 IT 202200026271
(43) Date of publication of application: 29.10.2025
(73) Proprietor: ADIGE-SYS S.P.A., 38056 Levico Terme (TN) (IT)
(72) Inventor: BALDESSARI, Matteo, 38057 Pergine Valsugana TN (IT); BONENTI, Claudio, 38051 Borgo Valsugana TN (IT); BEBER, Marco, 38050 Novaledo TN (IT); ARMELLINI, Paolo, 38051 Borgo Valsugana TN (IT)
(74) Representative: Rondano, Davide
(86) International application number: PCT/IB2023/062753
(87) International publication number: WO 2024/134412

(56) References cited:
- CN-A- 111 168 256
- CN-U- 207 873 440
- DE-A1- 102016 104 107
- US-A1- 2003 015 506

## Description

The present invention relates generally to a support system for use in a machine for the laser working of tubes and profiles, in particular a machine for the laser cutting of tubes and profiles, for supporting the tube or profile being worked. More specifically, the present invention relates to a machine for the laser working, in particular for the laser cutting, of tubes and profiles, with a support system of the type comprising at least one rotatable support member having a variable-radius receiving cavity so as to be able to adapt to tubes and profiles with cross-sections of different shapes and sizes.

### State of the art

In machines for the laser working of tubes and profiles, in particular for the laser cutting of tubes and profiles, the tube or profile being worked is normally held at its rear end, or tail end, by the holding means of a tube-holding carriage and is supported and guided close to the working area, where a working head performs the required working operations on the tube or profile by means of a focused laser beam, by a ring-shaped support member. The holding means of the tube-holding carriage define a feed axis of the machine, with which a longitudinal axis of the tube or profile is aligned during working, while the ring-shaped support member has the function of supporting and guiding the tube or profile being worked in the vicinity of the working head, ensuring that the longitudinal axis of the tube or profile is aligned with the feed axis. Typically, the tube-holding carriage is movable in the direction of the longitudinal axis of the tube or profile to control the forward movement of the tube or profile and is also provided with rotation control means for controlling the rotary movement of the tube or profile about its longitudinal axis, while the ring-shaped support member is mounted in a fixed or movable position on the machine base, upstream or downstream (with respect to the direction of advancement of the tube or profile) of the working head. In some cases, a plurality of ring-shaped support members may be used, which may be mounted in a fixed or movable position on the machine bed and may possibly perform the function of an additional tube-holding carriage. A machine with such a support system is known for example from CN111168256, on which the preamble of independent claim 1 is based.

Various support system solutions are known for the support of a tube or profile on a machine for the laser working of tubes and profiles, in particular a machine for the laser cutting of tubes and profiles, upstream of the working head.

According to a first known solution, the support system comprises one or more support devices each having a cylindrical roller supported at the end of a swing arm. In this case, the angular position of the swing arm is adjusted, for example by numerical control, to position the roller at the desired height.

According to a further known solution (as disclosed, for example, in EP2508298, DE102016104107 and DE102008016733), the support system comprises one or more variable-radius support members arranged upstream of the working head, each of which is rotatably supported about a horizontal axis of rotation extending transversely to the tube or profile being worked, i.e. lying in a plane perpendicular to the longitudinal axis of the tube or profile. Each support member has a receiving cavity for receiving the tube or profile, whose profile has, in cross-section, a circumference arc shape with a radius that varies according to the angular position of the support member about the aforementioned axis of rotation. More specifically, the receiving cavity is shaped in such a way that the radius of the circumference arc profile increases continuously with the rotation of the support member in a given direction. By controlling the angular position of the support member about its axis of rotation, it is thus possible to vary the radius of the circumference arc profile of the receiving cavity according to the shape and size of the cross-section of the tube or profile being worked. Such a support member is able, on the one hand, to adapt to the size of the tube or profile being worked, as well as being able to support tubes and profiles with a cross-section of other shape (not only circular, but also for example square, rectangular, C-shaped, I-shaped, L-shaped, etc.), and, on the other, to restrain the tube or profile laterally.

Furthermore, for the support of the tube or profile downstream of the working head, there are generally provided roller support devices, for example the so-called roller tracks, i.e. tables comprising a plurality of idle rollers each of which is supported in a freely rotating manner about a horizontal axis of rotation, perpendicular to the feed axis of the machine. Such support devices, however, are note able to ensure adequate lateral containment of the tube or profile being worked.

### Summary of the invention

It is therefore an object of the present invention to provide a machine for the laser working of tubes and profiles with a support system for supporting the tube or profile that is not affected by the drawbacks of the prior art mentioned above.

This and other objects are fully achieved according to the present invention by virtue of a machine for the laser working of tubes and profiles provided with a support system as defined in independent claim 1.

Advantageous embodiments of the invention are specified in the dependent claims, the subject-matter of which is to be understood as forming part of the following description. In summary, the invention is based on the idea of providing a support system comprising a plurality of variable-radius support members arranged downstream of the laser working means of the working unit of the machine. By providing a plurality of variable-radius support members downstream of the laser working means of the working unit of the machine, thus on the unloading side of the machine, it is possible to ensure adequate lateral containment of the tube or profile on the unloading side of the machine.

In particular, a support system according to the present invention is advantageous both in case of use with tubes and profiles having a cross-section with a low moment of inertia (therefore, with particularly flexible tubes and profiles) and in case of use with tubes and profiles having a cross-section with a high moment of inertia (therefore, with particularly heavy tubes and profiles). In both cases, ineffective lateral containment of the tube or profile can lead to a number of drawbacks, such as:
- poor working quality and accuracy, since the actual position of the tube or profile in the working area of the machine does not coincide with the desired one due to the lateral bending of the tube or profile;
- problems with the unloading of the tube or profile, as the tube or profile might end up in a position not suitable for automatic unloading from the machine due to its lateral bending; and
- risk of damages to the machine due to lateral movements of the tube or profile.

These drawbacks are avoided, or at least greatly reduced, by using a support system according to the invention.

Preferably, the aforementioned plurality of variable-radius support members includes at least one first support member arranged below the feed axis of the machine to support the tube or profile from below.

Even more preferably, the aforementioned plurality of variable-radius support members further comprises at least one second support member arranged above the feed axis to laterally restrain the tube or profile, in which case the at least one second support member and the at least one first support member are advantageously arranged offset from each other along the feed axis.

### Brief description of the drawings

Further features and advantages of the present invention will be evident from the following detailed description, given purely by way of non-limiting example with reference to the accompanying drawings, wherein:
- Figures 1 and 2 are a perspective view and a side view, respectively, of part of a machine for the laser cutting of tubes and profiles according to an embodiment of the present invention;
- Figures 3 and 4 are a side and perspective view, respectively, of part of the support system of the machine of Figures 1 and 2 immediately downstream of the working head;
- Figure 5 is a perspective view of a variable-radius support member of the support system of Figures 3 and 4, arranged below the feed axis of the machine;
- Figure 6 is a perspective view of a variable-radius support member of the support system of Figures 3 and 4, arranged above the feed axis of the machine;
- Figures 7 and 8 are front views of the support system of Figures 3 and 4, in the case of use with a circular tube and with a square tube, respectively; and
- Figures 9 and 10 are a perspective view and a front view, respectively, of part of a support system, immediately downstream of the working head, of a machine for the laser cutting of tubes and profiles according to a further embodiment of the present invention.

### Detailed description

In the following description and claims, the term "longitudinal" is used to identify a direction coincident with, or parallel to, a longitudinal axis of the tube or profile being worked on the machine, while the term "transverse" is used to identify a direction lying in a plane perpendicular to the longitudinal axis. Furthermore, terms such as "upper" and "lower", or "horizontal" and "vertical" etc., used in relation to the support system, are intended to refer to the condition in which the support system is mounted on the machine.

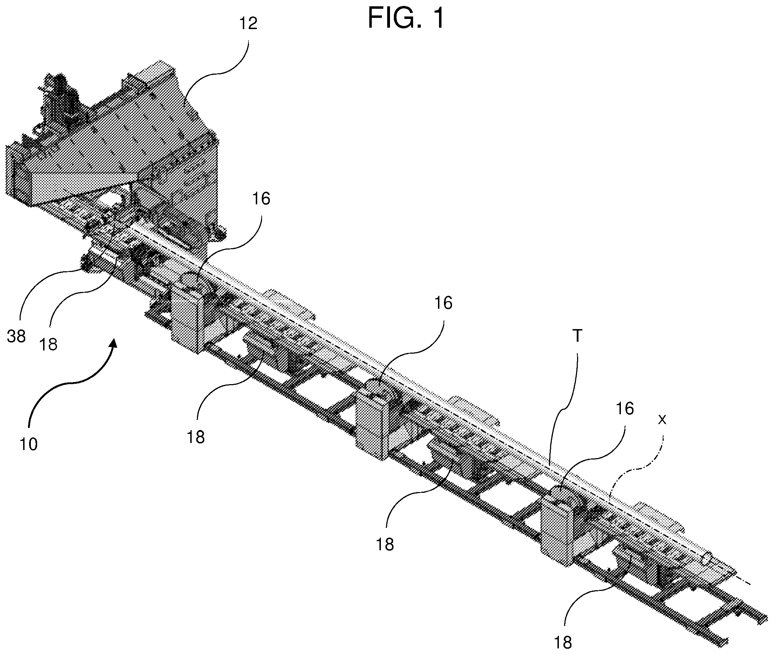

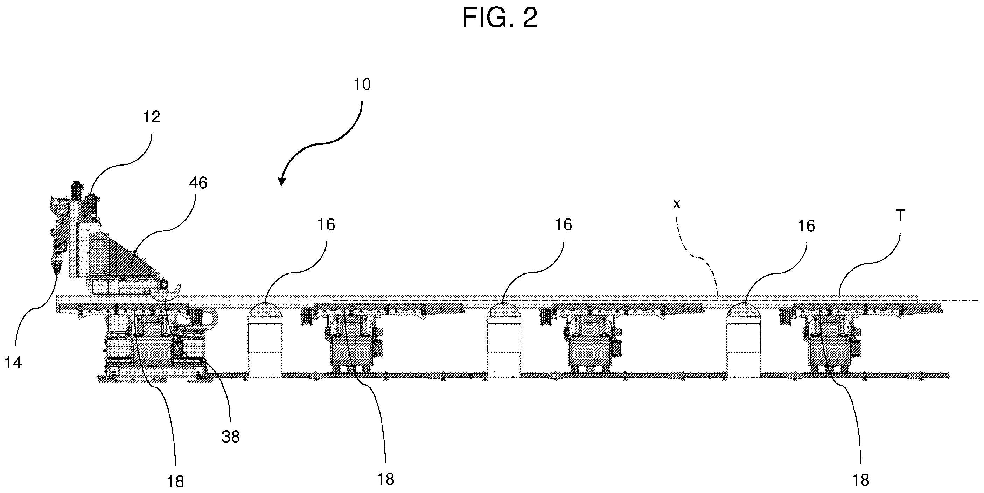

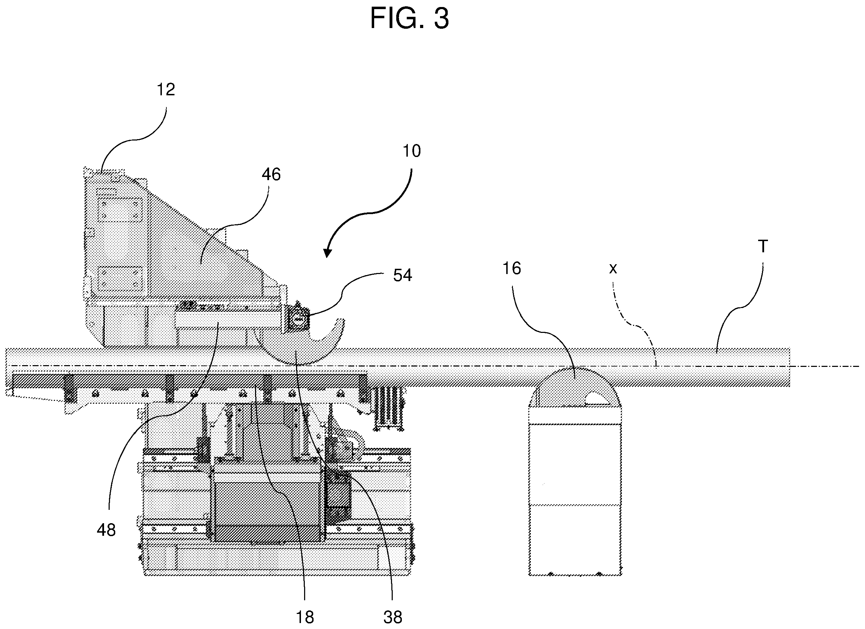

Referring first to Figures 1 to 4, a machine for the working of tubes and profiles, to which a support system according to the invention is applicable, is generally indicated with 10. In the example proposed herein, the machine is a machine for the laser cutting of tubes and profiles, but the invention is equally applicable to other types of machines for the laser working of tubes and profiles in which there is a need to support the tube or profile being worked for its entire length or part of its length.

The machine 10 comprises, in a per-se-known manner, a working unit 12 with a working head 14 capable of performing working operations (which in the present case are cutting operations, but which might also include other types of operations, such as welding operations) by means of a laser beam focused on a tube T. The longitudinal axis of the tube T is indicated x. The tube T shown in Figures 1 to 3 is a tube with a circular cross-section, but nevertheless the machine 10 is capable of working on tubes with a cross-section of any other shape, for example square or rectangular, as well as on profiles of any shape, for example C-profiles, T-profiles, IPE profiles, HEA profiles, and the like. For the sake of convenience, only the term tube will be used in the following description, it being understood, however, that what is illustrated below is equally applicable to the case that the machine is used to work on a profile.

The machine 10 further comprises a tube-holding carriage (not shown, but anyway of a per-se-known type) provided with holding means configured to hold the tube T at a tail-end. Such holding means define a feed axis of the machine, with which the longitudinal axis x of the tube T is aligned during working. Upstream of the working head 14, and in its vicinity, there is also advantageously provided a ring-shaped support member (not shown, but anyway of a per-se-known type) capable of supporting and guiding the tube T being worked while keeping the longitudinal axis x of the tube T aligned with the feed axis. During working, the tube T is caused by the tube-holding carriage to move forward along the direction of its longitudinal axis x, as well as according to the present invention, to rotate about this longitudinal axis.

The machine 10 further comprises a support system for supporting the tube T downstream of the working head 14. The support system comprises first of all lower support means arranged below the feed axis to support the tube T from below. The lower support means comprise a plurality of variable-radius support members 16 (hereinafter, for convenience, simply referred to as support members), or, more generally, at least one variable-radius support member. Furthermore, in the embodiment proposed herein the lower support means comprise a plurality of roller tracks, i.e. roller support devices, 18. In this case, the support members 16 and the roller tracks 18 are arranged one after the other along the direction of the feed axis, preferably in an alternating manner, i.e. with a support member 16 interposed between each pair of consecutive roller tracks 18 and vice versa.

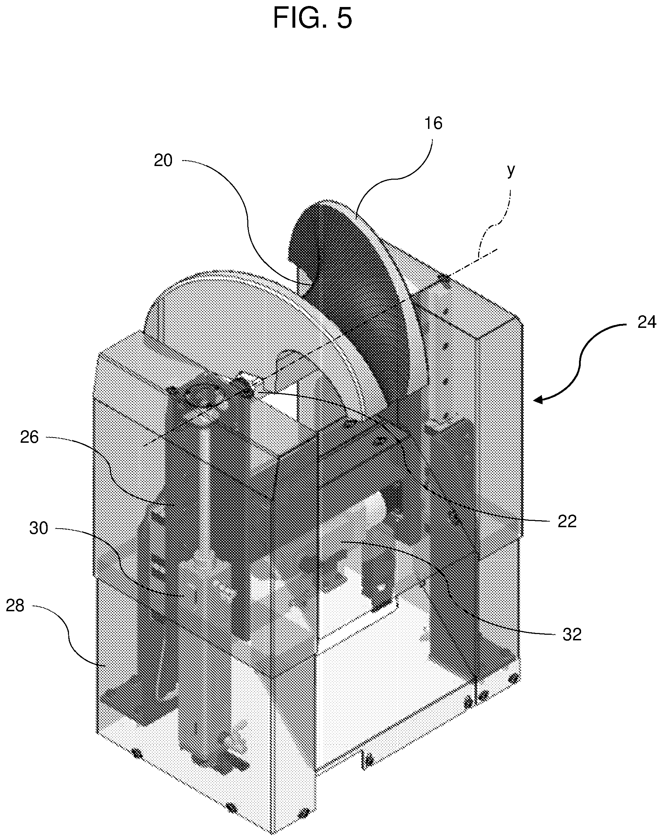

As shown in detail in Figure 5, each support member 16 has, in a per-se-known manner, a receiving cavity 20 whose profile has, in cross-section, a circumferential arc shape with a radius that varies according to the angular position of the support member. More specifically, the receiving cavity 20 is shaped in such a way that the radius of the circumferential arc profile increases continuously with the rotation of the support member 16 in a given direction, in the present case in a clockwise direction with respect to a person looking at Figure 5.

Each support member 16 is mounted on a respective shaft 22, which in turn is supported by a respective support structure 24 so as to be rotatable about an axis of rotation y lying in a transverse plane, i.e. in a plane perpendicular to the feed axis of the machine. Preferably, as in the illustrated example, the axis of rotation y is oriented horizontally, but it might also be inclined by a certain angle, in particular an acute angle, to the horizontal.

Vertical positioning means are associated with each support member 16 for adjusting the vertical position of the shaft 22, and therefore of the support member 16 carried thereon, so as to allow, for example, to move the support member 16 from a working position, in which the support member 16 is in contact with the tube T, to a rest position, in which the support member 16 is not in contact with the tube T and therefore does not perform any supporting action on the tube. In this respect, according to the embodiment proposed herein, the support structure 24 comprises an upper structure part 26, on which the shaft 22 is mounted, a lower structure part 28, with respect to which the upper structure part 26 is vertically movable, and actuator means, formed for example by a pneumatic cylinder 30, arranged to move the upper structure part 26 with respect to the lower structure part 28 in a vertical direction.

Rotation control means suitable for controlling rotation of the shaft 22, and thus of the support member 16, are also associated with each support member 16 in order to select the radius of the circumference arc profile of the receiving cavity 20 of the support member 16 which is most suitable for the tube T to be supported. According to the embodiment proposed herein, such rotation control means comprise a motor 32, in particular an electric motor, which is mounted on the upper structure part 26 of the support structure 24, and a transmission mechanism, such as a belt and pulley mechanism (not visible in the view of Figure 5, but in any case of a per-se-known type), for transmitting to the shaft 22 the rotary motion in one direction or the other generated by the motor 32.

According to an embodiment (not shown in the drawings), tilt adjustment means may also be associated with each support member 16 to adjust the angle of inclination of the axis of rotation y of the support member 16 to the horizontal.

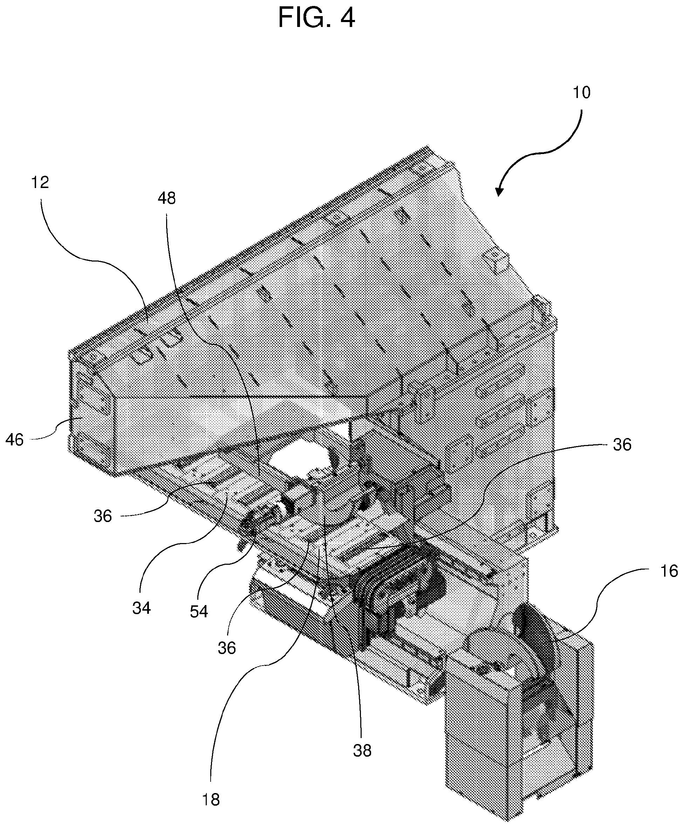

As far as the roller tracks 18 are concerned, each of them basically comprises a table 34 on which a plurality of idle rollers 36 are mounted in a freely rotatable manner about respective horizontal axes of rotation oriented perpendicular to the feed axis of the machine, as shown in Figure 4. The table 34 is vertically movable under the control of actuator means (not illustrated in detail, but nevertheless of a per-se-known type), so as to allow the vertical position of the idle rollers 36 to be adjusted depending on the transverse size of the tube T being worked.

Preferably, the support system further comprises at least one variable-radius support member 38 (hereinafter simply referred to, for convenience, as support member) arranged above the feed axis of the machine. In the embodiment of Figures 1 to 8, only one support member 38 is provided for, which is arranged in the vicinity of the working head 14, immediately downstream thereof. More specifically, the support member 38 is arranged above one of the roller tracks 18, thus at a distance, along the direction of the feed axis of the machine, from the first one of the support members 16. However, several support members 38 may be provided for, for example as many as the roller tracks 18, in which case each support member 38 will be arranged above a respective roller track 18.

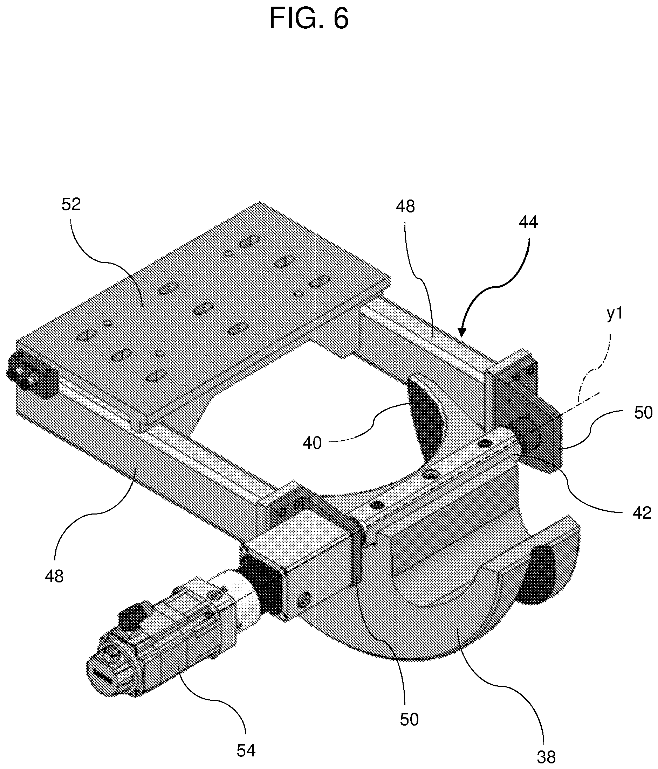

With reference to Figure 6, the support member 38 has a structure similar to that of the support members 16 described above and therefore also has, in a per-se-known manner, a receiving cavity 40 whose profile has, in cross-section, a circumferential arc shape with a radius that varies according to the angular position of the support member. More specifically, the receiving cavity 40 is shaped in such a way that the radius of the circumferential arc profile increases continuously with the rotation of the support member 38 in a given direction, in the present case in a counterclockwise direction with respect to a person looking at Figure 6.

The support member 38 is mounted on a shaft 42, which in turn is supported by a support structure 44 so as to be rotatable about an axis of rotation y1 lying in a transverse plane, i.e. in a plane perpendicular to the feed axis of the machine. Preferably, as in the illustrated example, the axis of rotation y1 is oriented horizontally, but it might also be inclined by a certain angle, in particular an acute angle, to the horizontal. Also in this case, it is possible to envisage the use of means for adjusting the angle of inclination of the axis of rotation y1 of the support member 38 to the horizontal.

The support structure 44 may be vertically fixed, as in the embodiment proposed herein, or may be vertically movable, in which case suitable vertical positioning means will be provided to adjust the vertical position of the support structure 44, and thus of the support member 38. In particular, in the embodiment proposed herein the support structure 44 is attached to a cross member 46 of the working unit 12 carrying the working head 14.

The support structure 44 may, for example, comprise, as in the embodiment proposed herein, a pair of longitudinal profiles 48, a pair of brackets 50, each of which is attached to an end of a respective longitudinal profile 48 and supports a respective end of the shaft 42, and a connecting plate 52, to which the longitudinal profiles 48 are attached and which in turn is attached to the cross member 46 of the working unit 12.

Furthermore, rotation control means are associated with the support member 38 for controlling rotation of the shaft 42, and thus of the support member 38, so as to select the radius of the circumference arc profile of the receiving cavity 40 which is most suitable for the tube T to be supported. According to the embodiment proposed herein, such rotation control means comprise a motor 54, in particular an electric motor, which is preferably mounted coaxially to the shaft 42, so as to minimise the vertical size of the assembly formed by the support member 38 and the motor 54.

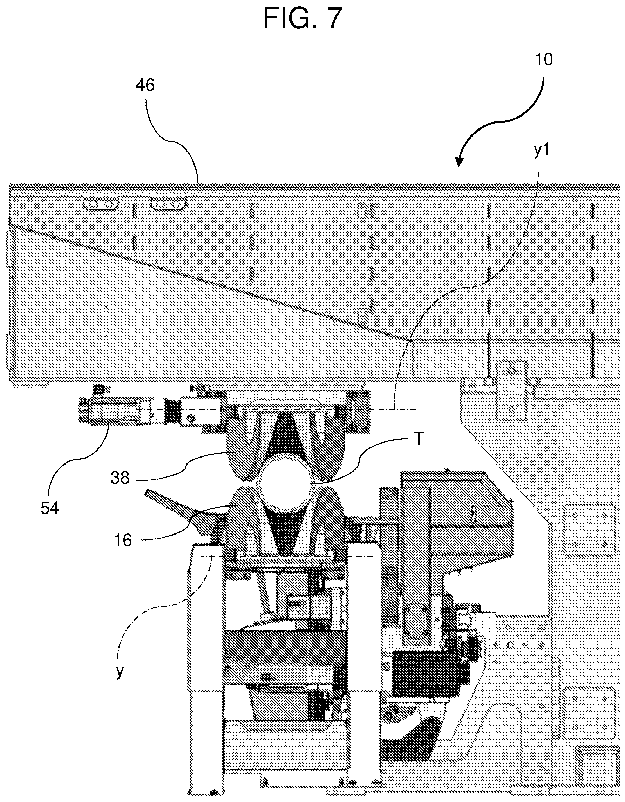

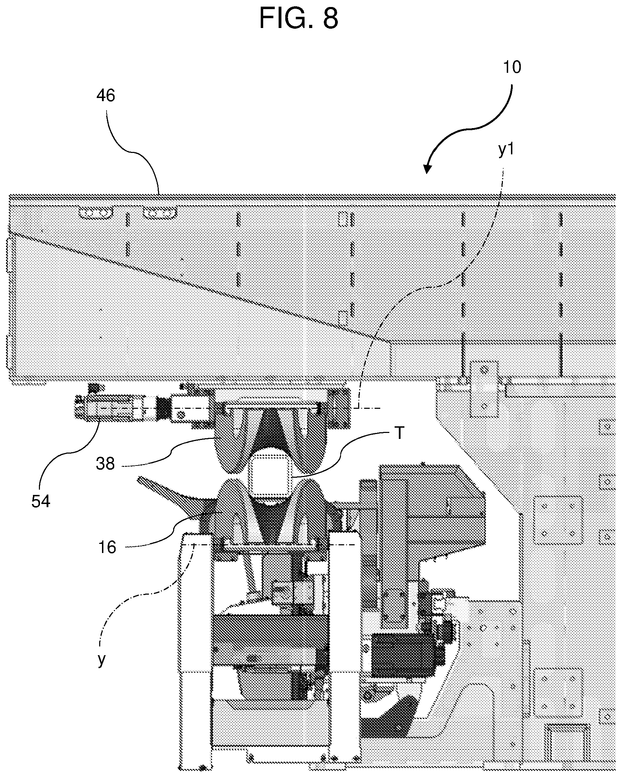

As can be seen in particular from the observation of Figures 7 and 8, relating respectively to the case in which the tube T has a circular cross-section and to the case in which the tube T has a square cross-section, the use of one or more variable-radius support members downstream of the working head of the machine represents a simple, economic and space-saving solution to the problem of ensuring adequate lateral containment of the tube on the unloading side of the machine.

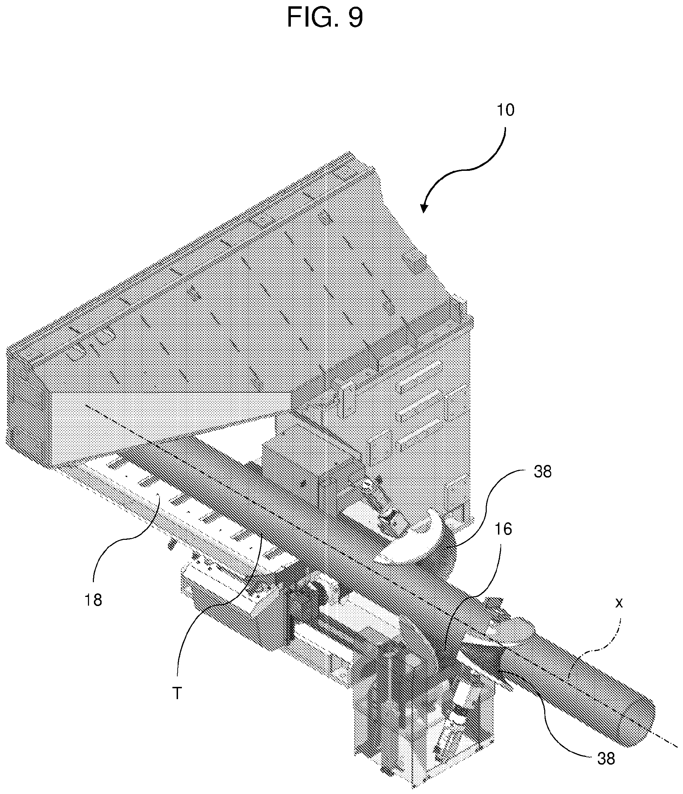

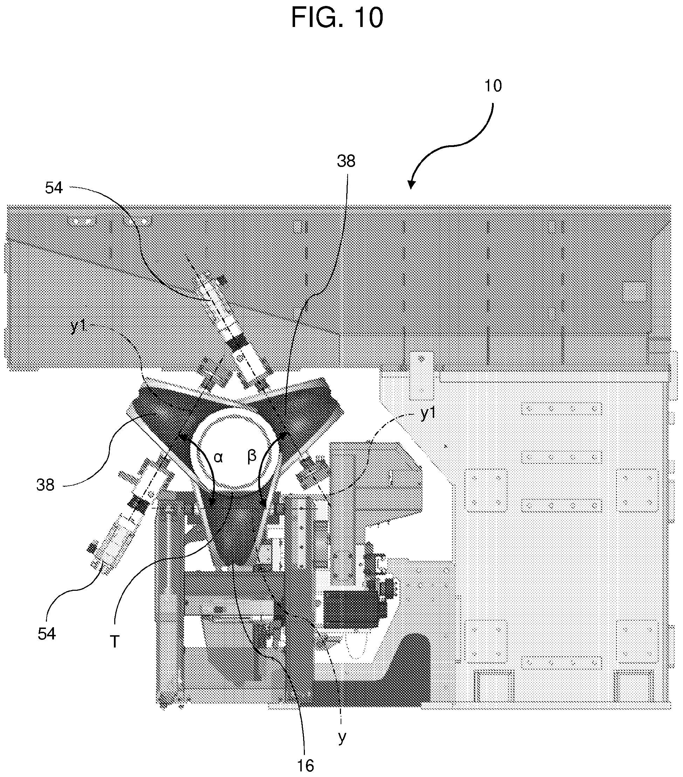

Finally, Figures 9 and 10, in which parts and elements identical or corresponding to those of the preceding figures have been assigned the same reference numbers, illustrate an alternative embodiment of the present invention, according to which, in addition to a variable-radius support member 16 arranged below the feed axis of the machine with the function of supporting the tube T, one or more pairs of support members 38 (of which only one pair of support members is shown in Figures 9 and 10) are provided with the function of lateral containment for the tube T. The pairs of support members 38 are in this case arranged with their respective axes of rotation y1 inclined by an acute angle (respectively indicated α and β) to the horizontal. In particular, in the example of Figures 9 and 10, the support member 16 and the support members 38 are arranged at 120° to each other and therefore completely embrace the profile of the tube T being worked. In this case, therefore, the axis of rotation y of the support member 16 is oriented horizontally, while the axes of rotation y1 of both support members 38 are inclined by 60° to the horizontal (in this case, therefore, α = β = 60°). For the rest, what has already been stated above with reference to the embodiment of Figures 1 to 8 still applies.

The present invention has been described herein with reference to some preferred embodiments thereof. It is to be understood that other embodiments may be envisaged, as long as they are falling under the scope of the present invention as defined in the appended claims.

For example, although in the embodiments proposed herein the use of one motor for each variable-radius support member is envisaged, it is nevertheless possible to envisage the use of one or more motors associated with several variable-radius support members, for example a first motor associated with all support members 16, i.e. all the support members arranged below the feed axis of the machine, and a second motor associated with all support members 38, i.e. all the support members arranged above the feed axis of the machine.

## Claims

1. Machine for the laser working, in particular for the laser cutting, of tubes and profiles (T), comprising
- a working unit (12) provided with laser working means (14),
- feeding means arranged to move each time a tube or profile (T) to be worked towards the working unit (12) along a feed axis coinciding with a longitudinal axis (x) of the tube or profile (T), as well as to rotate the tube or profile (T) about said longitudinal axis (x), wherein said feeding means comprise a tube-holding carriage provided with holding means configured to hold the tube or profile (T) at a tail end thereof, and
- a support system (16, 18, 38) arranged downstream of said laser working means (14) for supporting the tube or profile (T) being worked,
**characterized in that** the support system comprises a plurality of variable-radius support members (16, 38), each of which is rotatably supported for rotation about a transverse axis of rotation (y, y1) and has a receiving cavity (20, 40) whose profile has, in cross-section, a circumferential arc shape with a radius varying according to the angular position of said support member (16, 38).

2. Machine according to claim 1, wherein said plurality of variable-radius support members (16, 38) comprises at least one first support member (16) arranged below said feed axis to support from below the tube or profile (T) being worked.

3. Machine according to claim 2, wherein the axis of rotation (y) of said at least one first support member (16) is oriented horizontally.

4. Machine according to claim 2 or claim 3, wherein the support system further comprises first motor means (32) associated to said at least one first support member (16) to drive it into rotation about the respective axis of rotation (y).

5. Machine according to any one of claims 2 to 4, wherein said plurality of variable-radius support members (16, 38) further comprises at least one second support member (38) arranged above said feed axis to laterally restrain the tube or profile (T).

6. Machine according to claim 5, wherein the axis of rotation (y1) of said at least one second support member (38) is oriented horizontally, or inclined by an acute angle (α, β) to the horizontal.

7. Machine according to claim 5 or claim 6, wherein the support system further comprises second motor means (54) associated to said at least one second support member (38) to drive it into rotation about the respective axis of rotation (y).

8. Machine according to claim 7, wherein said second motor means comprise, for each second support member (38), a respective motor mounted coaxially with the axis of rotation (y1) of said second support member (38).

9. Machine according to any one of claims 6 to 8, wherein said at least one second support member (38) and said at least one first support member (16) are arranged offset with respect to each other along said feed axis.

10. Machine according to any one of claims 2 to 9, wherein the support system further comprises at least one roller track (18) for supporting the tube or profile (T) from below and wherein said at least one first support member (16) and said at least one roller track (18) are arranged in alternating manner along said feed axis.

## Patentansprüche

1. Maschine für das Laserbearbeiten, insbesondere für das Laserschneiden, von Rohren und Profilen (T), umfassend
- eine Arbeitseinheit (12), die mit Laserbearbeitungsmitteln (14) versehen ist,
- Zuführmittel, die angeordnet sind, um jedes Mal ein zu bearbeitendes Rohr oder Profil (T) zu der Arbeitseinheit (12) entlang einer Vorschubachse, die mit einer Längsachse (x) des Rohrs oder des Profils (T) zusammenfällt, hin zu bewegen, sowie um das Rohr oder das Profil (T) um die Längsachse (x) herum zu drehen, wobei die Zuführmittel einen Rohrhalteschlitten umfassen, der mit Haltemitteln versehen ist, die konfiguriert sind, um das Rohr oder das Profil (T) an einem hinteren Ende davon zu halten, und
- ein Stützsystem (16, 18, 38), das stromabwärts von den Laserbearbeitungsmitteln (14) angeordnet ist, zum Stützen des Rohrs oder des Profils (T), das bearbeitet wird,
**dadurch gekennzeichnet, dass** das Stützsystem eine Vielzahl von Stützelementen (16, 38) mit variablem Radius umfasst, von denen jedes für eine Drehung um eine schräg verlaufende Drehachse (y, y1) herum drehbar gestützt ist und einen Aufnahmehohlraum (20, 40) aufweist, dessen Profil in einem Querschnitt eine umlaufende Bogenform mit einem Radius aufweist, der gemäß der Winkellage des Stützelements (16, 38) variiert.

2. Maschine nach Anspruch 1, wobei die Vielzahl von Stützelementen (16, 38) mit variablem Radius mindestens ein erstes Stützelement (16) umfasst, das unterhalb der Vorschubachse angeordnet ist, um das Rohr oder das Profil (T), das bearbeitet wird, von unten zu stützen.

3. Maschine nach Anspruch 2, wobei die Drehachse (y) des mindestens einen ersten Stützelements (16) horizontal ausgerichtet ist.

4. Maschine nach Anspruch 2 oder 3, wobei das Stützsystem ferner erste Motormittel (32) umfasst, die mit dem mindestens einen ersten Stützelement (16) verknüpft sind, um dieses in Drehung um die jeweilige Drehachse (y) herum zu versetzen.

5. Maschine nach einem der Ansprüche 2 bis 4, wobei die Vielzahl von Stützelementen (16, 38) mit variablem Radius ferner mindestens ein zweites Stützelement (38) umfasst, das über der Vorschubachse angeordnet ist, um das Rohr oder das Profil (T) seitlich zu beschränken.

6. Maschine nach Anspruch 5, wobei die Drehachse (y1) des mindestens einen zweiten Stützelements (38) horizontal ausgerichtet oder um einen spitzen Winkel (α, β) zu der Horizontalen geneigt ist.

7. Maschine nach Anspruch 5 oder 6, wobei das Stützsystem ferner zweite Motormittel (54) umfasst, die mit dem mindestens einen zweiten Stützelement (38) verknüpft sind, um dieses in Drehung um die jeweilige Drehachse (y) herum zu versetzen.

8. Maschine nach Anspruch 7, wobei die zweiten Motormittel, für jedes zweite Stützelement (38) einen jeweiligen Motor umfassen, der zu der Drehachse (y1) des zweiten Stützelements (38) koaxial montiert ist.

9. Maschine nach einem der Ansprüche 6 bis 8, wobei das mindestens eine zweite Stützelement (38) und das mindestens eine erste Stützelement (16) entlang der Vorschubachse in Bezug aufeinander versetzt angeordnet sind.

10. Maschine nach einem der Ansprüche 2 bis 9, wobei das Stützsystem ferner mindestens eine Rollenbahn (18) zum Stützen des Rohrs oder des Profils (T) von unten umfasst und wobei das mindestens eine erste Stützelement (16) und die mindestens eine Rollenbahn (18) in einer abwechselnden Art entlang der Vorschubachse angeordnet sind.

## Revendications

1. Machine destinée à l'usinage au laser, en particulier pour la découpe au laser, de tubes et profilés (T), comprenant
- une unité d'usinage (12) pourvue d'un moyen d'usinage au laser (14),
- unmoyen d'avance agencé pour déplacer chaque fois un tube ou un profilé (T) à usiner vers l'unité d'usinage (12) le long d'un axe d'avance coïncidant avec un axe longitudinal (x) du tube ou du profilé (T), ainsi que pour faire tourner le tube ou le profilé (T) autour dudit axe longitudinal (x), dans laquelle ledit moyen d'avance comprend un chariot de maintien de tube pourvu d'un moyen de maintien conçu pour maintenir le tube ou le profilé (T) au niveau d'une extrémité arrière de celui-ci, et
- un système de support (16, 18, 38) agencé en aval dudit moyen d'usinage au laser (14) permettant de supporter le tube ou le profilé (T) usiné,
**caractérisée en ce que** le système de support comprend une pluralité d'éléments de support à rayon variable (16, 38), chacun d'entre eux étant supporté de manière rotative pour une rotation autour d'un axe de rotation transversal (y, y1) et ayant une cavité de réception (20, 40) dont le profil présente, en coupe transversale, une forme d'arc circonférentiel avec un rayon variant selon la position angulaire dudit élément de support (16, 38).

2. Machine selon la revendication 1, dans laquelle ladite pluralité d'éléments de support à rayon variable (16, 38) comprend au moins un premier élément de support (16) agencé sous ledit axe d'avance pour supporter, depuis le dessous, le tube ou le profilé (T) en cours d'usinage.

3. Machine selon la revendication 2, dans laquelle l'axe de rotation (y) dudit au moins un premier élément de support (16) est orienté horizontalement.

4. Machine selon la revendication 2 ou la revendication 3, dans laquelle le système de support comprend en outre un premier moyen moteur (32) associé audit au moins un premier élément de support (16) pour l'entraîner en rotation autour de l'axe de rotation (y) respectif.

5. Machine selon l'une quelconque des revendications 2 à 4, dans laquelle ladite pluralité d'éléments de support à rayon variable (16, 38) comprend en outre au moins un second élément de support (38) agencé au-dessus dudit axe d'avance pour retenir latéralement le tube ou le profilé (T).

6. Machine selon la revendication 5, dans laquelle l'axe de rotation (y1) dudit au moins un second élément de support (38) est orienté horizontalement, ou incliné d'un angle aigu (α, β) par rapport à l'horizontale.

7. Machine selon la revendication 5 ou la revendication 6, dans laquelle le système de support comprend en outre un second moyen moteur (54) associé audit au moins un second élément de support (38) pour l'entraîner en rotation autour de l'axe de rotation (y) respectif.

8. Machine selon la revendication 7, dans laquelle ledit second moyen moteur comprend, pour chaque second élément de support (38), un moteur respectif monté de manière coaxiale à l'axe de rotation (y1) dudit second élément de support (38).

9. Machine selon l'une quelconque des revendications 6 à 8, dans laquelle ledit au moins un second élément de support (38) et ledit au moins un premier élément de support (16) sont agencés de manière décalée l'un par rapport à l'autre le long dudit axe d'avance.

10. Machine selon l'une quelconque des revendications 2 à 9, dans laquelle le système de support comprend en outre au moins un chemin de roulement (18) pour supporter le tube ou le profilé (T) par le bas et dans laquelle ledit au moins un premier élément de support (16) et ledit au moins un chemin de roulement (18) sont agencés de manière alternée le long dudit axe d'avance.
